# EUROPÄISCHE PATENTSCHRIFT

(11) **EP 0 492 108 B1**
(45) Veröffentlichungstag und Bekanntmachung des Hinweises auf die Patenterteilung: **17.05.1995**
(21) Anmeldenummer: 91119211.0
(22) Anmeldetag: 12.11.1991
(51) Int. Cl.: F16C 11/04

(54) **Elementepaar zum Verbinden von zwei Streben, insbesondere Profilstreben für flexible Montagesysteme**
Pair of elements for connecting two struts, specially section members for flexible mountings
Paires d'éléments pour relier deux barres, en particulier profilés pour montage élastique

(30) Priorität: 20.12.1990 DE 4040866
(43) Veröffentlichungstag der Anmeldung: 01.07.1992
(73) Patentinhaber: ROBERT BOSCH GMBH, 70442 Stuttgart (DE)
(72) Erfinder: Ludwig, Peter, W-7400 Tübingen (DE)

(56) Entgegenhaltungen:
- EP-A- 0 000 848
- EP-A- 0 432 380
- WO-A-86/04104
- DE-A- 2 806 115
- DE-A- 3 243 238
- US-A- 2 805 016
- US-A- 4 043 000

## Beschreibung

### Stand der Technik

Die Erfindung geht aus von einem Elementepaar zum Verbinden von zwei Streben nach der Gattung des Hauptanspruchs. Ein derartiges Elementepaar ist aus der WO-A-86 04 104 bekannt. Bei einer anderen bekannten Ausführung eines Elementepaares ist jedes Einzelelement als ein mit zwei Verbindungslaschen versehenes Gabelstück ausgebildet, wobei mindestens eine Verbindungslasche einstückig mit dem Sockel verbunden ist. Derart ausgebildete Einzelelemente sind in ihren Abmessungen einem bestimmten Strebenprofil angepaßt, so daß für die Montage von Streben mit anderen Profilabmessungen weitere Ausführungen von Einzelelementen vorgesehen und auf Lager gehalten werden müssen.

### Vorteile der Erfindung

Mit den kennzeichnenden Merkmalen des Hauptanspruchs läßt sich demgegenüber in vorteilhafter Weise ein Baukastensystem realisieren, mit dessen einheitlich ausgebildeten Einzelteilen Elementepaare zum starren oder gelenkigen Verbindungen von Streben unterschiedlicher Abmessungen zusammengesetzt werden können. Dadurch lassen sich im Rahmen einer Mengenfertigung die Aufwendungen für die Lager- und Werkzeughaltung verringern.

Durch die in den Unteransprüchen aufgeführten Maßnahmen sind vorteilhafte Weiterbildungen der im Hauptanspruch angegebenen Anordnung möglich.

Eine einfache und leicht zusammenbaubare Ausführung eines Einzelelementes ergibt sich, wenn die Montagefläche an der einen Flachseite der Verbindungslasche und die eine Anbauflache an deren anderer Flachseite angeordnet ist, und wenn ferner die Verbindungslasche neben der Montagefläche einen erhöhten Rand hat, an welchem die andere Anbaufläche gebildet ist.

Für eine Typreihe von Streben mit unterschiedlichen Profilhöhen kann der Sockel auf die Ausführung mit der geringsten Profilhöhe abgestimmt und zum Verbinden von Streben dieser Ausführung an zwei sich parallel gegenüberliegenden Randseiten mit angebauten Verbindungslaschen versehen sein, deren Montageflächen in ein- und dieselbe Richtung weisen. Für Streben mit größerer Profilhöhe kann jeweils eine Verbindungslasche und ein Sockel ein Einzelelement bilden und jede der beiden zu verbindenden Streben mit zwei im axialen Abstand voneinander angeordneten derartigen Einzelelementen versehen sein.

### Zeichnung

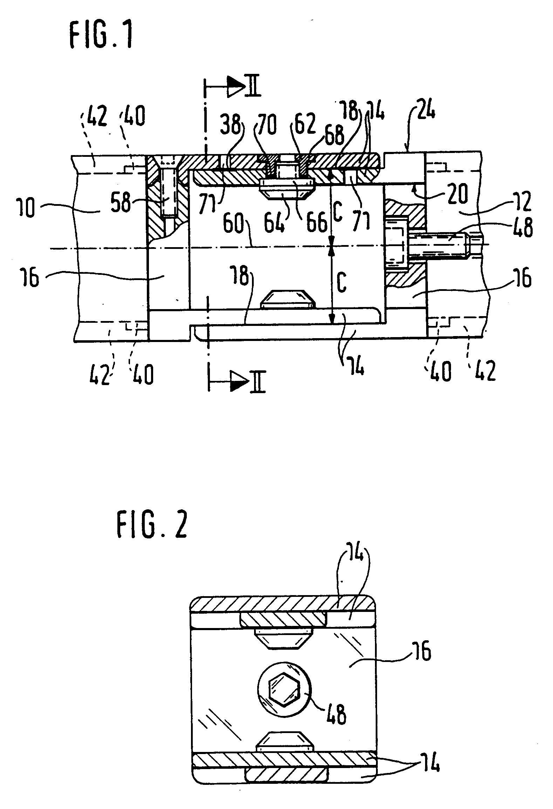

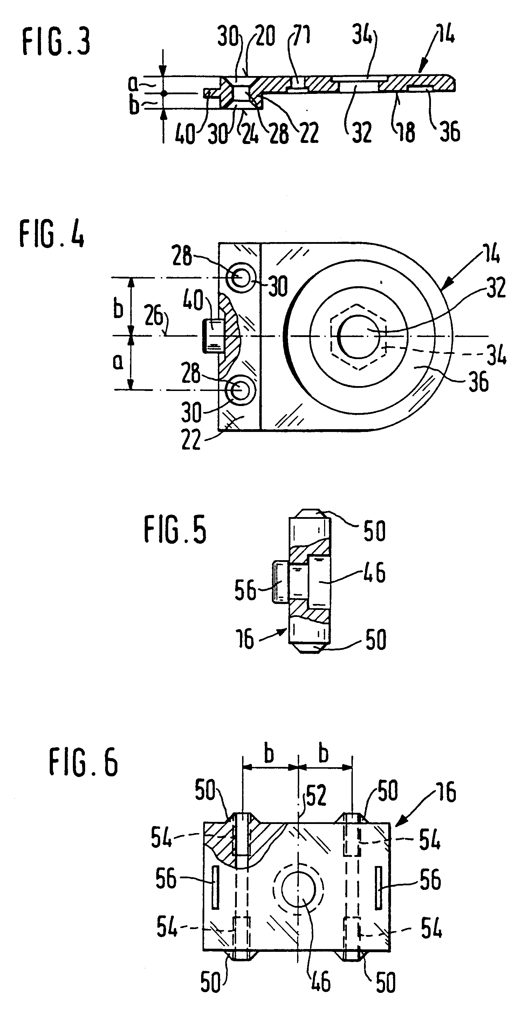

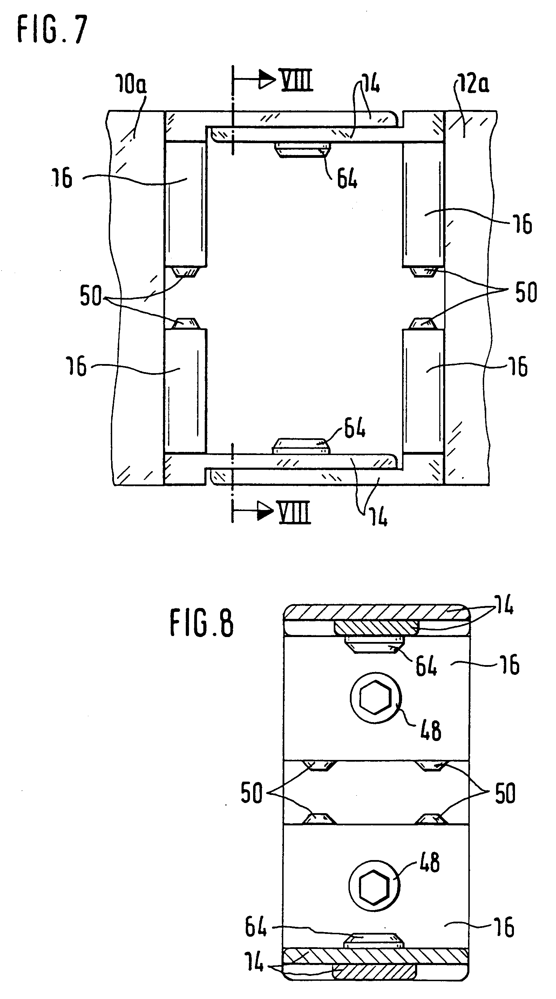

Ein Ausführungsbeispiel der Erfindung ist in der Zeichnung dargestellt und in der nachfolgenden Beschreibung näher erläutert. Es zeigen Figur 1 in Seitenansicht und teilweise im Schnitt ein aus Baukastenteilen hergestelltes Gelenk zum Verbinden von zwei Profilstreben, Figur 2 einen Schnitt nach der Linie II-II in Figur 1, Figur 3 einen Längsschnitt durch ein Einzelteil des Gelenks nach den Figuren 1 und 2 und Figur 4 die Unteransicht des Einzelteils nach Figur 3. Ferner zeigen Figur 5 in Seitenansicht und teilweise im Schnitt ein anderes Einzelteil des Gelenks nach den Figuren 1 und 2, Figur 6 eine Seitenansicht des Einzelteils nach Figur 5, Figur 7 eine Seitenansicht eines aus den gleichen Einzelteilen hergestellten Gelenks für Streben mit größerer Profilhöhe und Figur 8 einen Schnitt nach der Linie VIII-VIII in Figur 7.

### Beschreibung des Ausführungsbeispieles

Das Gelenk nach Figur 1 verbindet zwei Profilstreben 10 und 12 eines flexiblen Montagesystems. Jede Gelenkhälfte hat zwei identische Gelenklaschen 14, die über einen Sockel 16 miteinander und mit der einen Profilstrebe 10 bzw. 12 verbunden sind. Die Gelenklaschen 14 und die Sockel 16 beider Gelenkhälften sind untereinander ebenfalls identisch ausgebildet und bilden Teile eines Baukastensystems, aus welchem sich Gelenke für eine ganze Typreihe von Profilstreben unterschiedlicher Höhe zusammensetzen lassen.

Die Gelenklaschen 14 sind an der einen Flachseite je mit einer Montagefläche 18 versehen, mit der sie auf der Montagefläche 18 der zugeordneten Gelenklasche 14 der anderen Gelenkhälfte aufliegen. An der anderen Flachseite weisen die Gelenklaschen 14 eine erste Anbaufläche 20 auf, die sich im Abstand a parallel zur Montagefläche 18 erstreckt. Ferner ist jede Gelenklasche 14 neben der Montagefläche 18 mit einem erhöhten Rand 22 versehen, an der eine zweite Anbaufläche 24 gebildet ist. Diese liegt der ersten Anbaufläche 20 korrespondierend gegenüber und nimmt den gleichen Abstand a wie diese zur Montagefläche 18 ein.

Im Bereich der Anbauflächen 20, 24 ist jede Gelenklasche 14 mit zwei im gleichen Abstand b zu einer Symmetrieebene 26 angeordneten Bohrungen 28 versehen, die an beiden Mündungen konische Erweiterungen 30 haben. Ferner hat jede Gelenklasche 14 im Bereich der Montagefläche 18 und in der Symmetrieebene 26 liegend eine zylindrische Gelenkbohrung 32, die an der von der Montagefläche 18 abgekehrten Mündung in eine Wandvertiefung 34 mit sechseckigem Profil übergeht. Konzentrisch zur Gelenkbohrung 32 ist in der Montagefläche 18 eine Ringnut 36 zur Aufnahme eines Gleitrings 38 (Figur 1) vorgesehen. Ferner hat jede Gelenklasche 14 einen zungenartigen Zentrieransatz 40, der in eine Randaussparung 42 (Figur 1) der Profilstrebe 10 bzw. 12 greift und die richtige Lage der Gelenkteile an den Profilstreben sicherstellt.

Die beiden als Gleichteile ausgebildeten Sockel 16 sind im Zentrum je mit einer abgestuften Bohrung 46 zur Aufnahme des Kopfes einer Schraube 48 (Figur 1) versehen, mit welcher der Sockel 16 an der ebenen Stirnseite der einen Profilstrebe 10 bzw. 12 befestigt ist. An zwei gegenüberliegenden Randseiten ist jeder Sockel 16 mit zwei kegelförmigen Erhöhungen 50 versehen, die sich paarweise gegenüberliegen und von einer durch die Bohrung 46 gehenden Symmetrieebene 52 je den Abstand b haben. Die Erhöhungen 50 sind in der Form den Erweiterungen 30 an den Gelenklaschen 14 angepaßt und je von einer Gewindebohrung 54 zentral durchsetzt. Die Sockel 16 sind ferner je mit zwei Zentrieransätzen 56 versehen, die zum passenden Eingreifen in entsprechende Randaussparungen der Profilstreben dienen. Die Zentrieransätze 56 sind abbrechbar gestaltet für den Fall, daß die Zentrierung der Teile anderweitig erfolgt und die Zentrieransätze 56 den Zusammenbau behindern würden.

Die Gelenklaschen 14 sind mit dem Sockel 16 über Schrauben 58 verbunden, wobei die in die Erweiterungen 30 eingreifenden Erhöhungen 50 für eine exakte Zuordnung und formschlüssige Verbindung der Teile sorgen. Die beiden einer Profilstrebe 10 bzw. 12 zugeordneten Gelenklaschen 14 sind jeweils mit unterschiedlichen Anbauflächen 20, 24 am Sockel 16 befestigt, wobei jedoch ihre Montageflächen 18 den gleichen Abstand c zu einer waagerechten Symmetrieebene 60 einnehmen. Jeweils die beiden sich unmittelbar berührenden bzw. einen Gleitring 38 zwischen sich aufnehmenden Gelenklaschen 14 bilden ein Elementepaar, dessen Einzelelemente über einen die Gelenkbohrungen 32 durchsetzenden Gelenkbolzen 62 miteinander verbunden sind. Der Gelenkbolzen 62 ist durch eine Schraube 64 arretiert, wobei unter dem Schraubenkopf eine die Wandvertiefung 34 in der einen Gelenklasche 14 passend ausfüllende Scheibe 66 gelegt ist und der Gelenkbolzen 62 mit einem Sechskantbund 68 in die Wandvertiefung 34 der anderen Gelenklasche 14 greift. Die Beweglichkeit der Gelenklaschen um den Gelenkbolzen 62 wird durch eine Distanzscheibe 70 sichergestellt.

Beim Gelenk für gleichbreite, jedoch in der Höhe größer bemessene Profilstreben 10a und 12a nach den Figuren 7 und 8 sind die gleichen Einzelemente verwendet, wie sie vorstehend im Zusammenhang mit dem Gelenk nach den Figuren 1 und 2 beschrieben sind. Jedoch ist hier jede einzelne Gelenklasche 14 mit einem eigenen Sockel 16 verbunden und an jeder Profilstrebe 10a bzw. 12a sind zwei Sockel 16 in einem der Profilhöhe entsprechenden Abstand voneinander befestigt.

Die Vorteile des erfindungsgemäßen Baukastensystems kommen nicht nur bei den beschriebenen Gelenkverbindungen der Profilstreben 10, 12 bzw. 10a, 12a zur Geltung, sondern auch bei starren Verbindungen, bei denen die Distanzscheibe 70 entfällt und ein zusätzliches formschlüssiges Verstiften durch Durchbohren von vorgesehenen Stiftlöchern 71 ermöglicht wird.

## Patentansprüche

1. Elementepaar zum Verbinden von Streben, insbesondere Profilstreben für flexible Montagesysteme, mit zwei baugleichen Einzelelementen, die eine an einer Strebe (10, 12) befestigbare Befestigungslasche (16, 22) und eine mit dieser fest verbundene Verbindungslasche (14) haben, die mit einer Montagefläche (18) und einer Verbindungsbohrung (32) versehen und derart gegenüber den Befestigungsmitteln an der Befestigungslasche angeordnet ist, daß in der gewünschten Zuordnung der beiden Streben die Montageflächen (18) der angebauten Einzelelemente aneinander anliegen und die Verbindungsbohrungen (32) miteinander korrespondieren, dadurch gekennzeichnet, daß die Befestigungslasche von einem an die Verbindungslasche (14) angeformten Ansatz (22) und einem an den Ansatz (22) im rechten Winkel von der Verbindungslasche (14) abstehenden und von der Verbindungslasche (14) eines jeden Einzelelements getrennt ausgeführten, an der Strebe befestigbaren Sockel (16) gebildet ist, daß der Ansatz (22) mit zwei sich parallel zur Montagefläche (18) erstreckenden Anbauflächen (20, 24) versehen ist, die sich mit ihren Befestigungsmitteln (28, 30) korrespondierend gegenüberliegen und je den gleichen Abstand (a) zur Montagefläche (18) einnehmen, und daß der Sockel (16) an die eine und an die andere Anbaufläche (20, 24) kuppelbar ist.

2. Elementepaar nach Anspruch 1, dadurch gekennzeichnet, daß die Montagefläche (18) an der einen Flachseite der Verbindungslasche (14) und die eine Anbaufläche (20) an deren anderer Flachseite angeordnet ist, und daß die Verbindungslasche (14) neben der Montagefläche (18) einen erhöhten Rand (22) hat, an welchem die andere Anbaufläche (24) gebildet ist.

3. Elementepaar nach Anspruch 1 oder 2, dadurch gekennzeichnet, daß am Sockel (16) an zwei sich parallel gegenüberliegenden Randseiten zwei Verbindungslaschen (14) so angebaut sind, daß ihre Montageflächen (18) in ein- und dieselbe Richtung weisen.

## Claims

1. Pair of elements for connecting struts, in particular profile struts for flexible mounting systems, having two individual elements which are of the same construction and have a fastening plate (16, 22), which can be fastened on a strut (10, 12), and a connecting plate (14) which is connected fixedly thereto, is provided with a mounting surface (18) and a connecting bore (32) and is arranged opposite the fastening means on the fastening plate such that, in the desired arrangement of the two struts, the mounting surfaces (18) of the attached individual elements butt against one another and the connecting bores (32) correspond with one another, characterized in that the fastening plate is formed by an extension (22), integrally formed on the connecting plate (14), and a base (16) which projects, on the extension (22), at right angles from the connecting plate (14), is configured separately from the connecting plate (14) of each individual element and can be fastened on the strut, in that the extension (22) is provided with two attachment surfaces (20, 24) which extend parallel to the mounting surface (18), are located opposite one another, with their fastening means (28, 30) corresponding, and each assume the same distance (a) from the mounting surface (18), and in that the base (16) can be coupled to one and to the other attachment surface (20, 24).

2. Pair of elements according to Claim 1, characterized in that the mounting surface (18) is arranged on one flat side of the connecting plate (14) and one attachment surface (20) is arranged on the other flat side thereof, and in that, beside the mounting surface (18), the connecting plate (14) has an elevated border (22) on which the other attachment surface (24) is formed.

3. Pair of elements according to Claim 1 or 2, characterized in that two connecting plates (14) are attached on the base (16), on two border sides lying opposite one another in parallel, such that the mounting surfaces (18) of said connecting plates point in one and the same direction.

## Revendications

1. Paire d'éléments pour relier deux barres, en particulier des profilés utilisés dans des systèmes flexibles de montage, dans laquelle les deux éléments individuels sont de construction identique, et comportent chacun une patte (16, 22) de fixation à un des profilés (10, 12) ainsi qu'une patte de liaison (14) solidaire de la patte (16, 22) et présentant une portée de montage (18) et un alésage de liaison (32), cette patte de liaison étant disposée, par rapport aux moyens de fixation sur la patte (16, 22) de sorte que, lorsque les deux profilés occupent les positions souhaitées, les portées de montage (18) des éléments individuels soient en appui les unes sur les autres avec correspondance de leurs alésages de liaison (32), caractérisée en ce que :
- la patte de fixation est constituée d'un appendice (22) moulé, faisant partie du bord de la patte de liaison (14) et d'un socle (16) séparé, fixable sur la barre et monté sur l'appendice (22), à angle droit par rapport à la patte de liaison (14),
- l'appendice (22) présente des portées d'assemblage (20, 24) située à la même distance (a) de celle-ci, parallèles à la portée de montage (18), et équipées de moyens de fixation (28, 30) se correspondant face à face,
- le socle (16) peut être accouplé à l'une ou à l'autre des portées d'assemblage (20, 24).

2. Paire d'éléments selon la revendication 1, caractérisée en ce que la portée de montage (18) est située sur une face plate de la patte de liaison (14) tandis qu'une portée d'assemblage (20) est située sur l'autre face plate de cette patte qui présente, près de la portée de montage (18) un bord en relief (22) sur lequel se trouve l'autre portée d'assemblage (24).

3. Paire d'éléments selon la revendication 1 ou 2, caractérisée en ce que le socle (16) porte, le long de deux bords latéraux parallèles se faisant face , deux pattes de liaison (14) assemblées de manière que leurs portées de montage (18) présentent une seule et même direction.
